Europäisches Patentamt

European Patent Office

Office européen des brevets

(11) Publication number: **0 133 848**
**B1**

# (12) EUROPEAN PATENT SPECIFICATION

(45) Date of publication of patent specification: **07.10.87**

(21) Application number: **84870115.7**

(22) Date of filing: **10.08.84**

(51) Int. Cl.⁴: **C 08 K 5/10, C 08 L 29/14, B 32 B 27/30**

(54) Plasticized polyvinyl butyral interlayers process for forming same and plasticizer blend therefor.

(30) Priority: **15.08.83 US 523305**
**12.08.83 US 522932**
**12.08.83 US 522929**

(43) Date of publication of application:
**06.03.85 Bulletin 85/10**

(45) Publication of the grant of the patent:
**07.10.87 Bulletin 87/41**

(84) Designated Contracting States:
**BE DE FR GB IT**

(56) References cited:
**US-A-2 433 097**
**US-A-4 128 694**

(73) Proprietor: **MONSANTO COMPANY**
**Patent Department 800 North Lindbergh Boulevard**
**St. Louis, Missouri 63166 (US)**

(72) Inventor: **Gomez, Ildefonso Luis**
**223 Franklin Road**
**Longmeadow Massachusetts 01106 (US)**

(74) Representative: **McLean, Peter et al**
**Monsanto Europe S.A. Patent Department**
**Avenue de Tervuren 270-272 Letter Box No 1**
**B-1150 Brussels (BE)**

Courier Press, Leamington Spa, England.

## Description

### Background of the invention

This invention relates to polyvinyl butyral (PVB) sheet plasticized with fatty acid esters and more particularly with a fatty acid ester blend which provides the sheet with improved penetration resistance without significant loss in its resistance to stress cracking polycarbonate or polyacrylate when in contact therewith as an interlayer in a laminated glass assembly.

In recent years sociologists and psychologists have started a movement toward prisons without bars. Thick layers of impact resistant polycarbonate initially used in such applications were quite early determined to be inadequate since the polycarbonate could be burned or scratched or dissolved or fractured when heated or abused. Moreover, when exposed to the elements the polycarbonate turned yellow, lost its strength and was susceptible to crazing. Based on this early work a need was defined for a material for security applications which was strong, chemically impervious, and scratch and fracture resistant over a wide range of ambient conditions.

Thereafter laminates of one or more layers of glass with one or more layers of polycarbonate were proposed which in use were mounted with the glass layer on the outside exposed to the elements and the polycarbonate either forming the innermost surface or positioned inboard of a glass layer forming such innermost surface. However, with these laminates an interlayer between the glass and polycarbonate is necessary since polycarbonate will not adequately adhere to glass.

Thermoplastic polyurethane layers have been used to laminate polycarbonate to glass but polyurethanes are costly and usually require treatment of the glass with a primer coating before lamination. Moreover, such polyurethanes are difficult to process into laminates because their low melting temperatures dictate the need for a batch type deairing operation with long exposure to vacuum for complete air removal. Commercially available grades of PVB sheet are not acceptable as an interlayer to adhere polycarbonate to glass because the plasticizer in the PVB crazes the polycarbonate. To solve this a special barrier coating, as disclosed in US—A—4,243,719, was proposed between the polycarbonate and PVB to keep the plasticizer in the PVB away from the polycarbonate. The PVB is still necessary since the coating will not adhere to the glass and the PVB assists in absorbing energy on impacting. Such a coating must be pinhole-free for obvious reasons and moreover is costly in that it represents an additional layer in an already multilayered laminate which could be avoided if a plasticizer for PVB were available which did not craze the polycarbonate.

Sulfonamide and phosphate plasticizers for PVB which do not attack polycarbonate are disclosed in US—A—3,539,442 and 3,406,086 respectively but PVB containing such plasticizers can only be difficultly extruded in forming sheet since they tend to decompose at extrusion conditions and degrade the PVB.

Certain esters which in natural form can be the major constituents of castor oil are proposed in US—A—4,128,694 as plasticizers for PVB which neither craze polycarbonate or polyacrylate nor deteriorate during extrusion of plasticized PVB. However, such interlayers exhibit relatively high glass transition temperatures (Tg) at the usual plasticizer loadings and marginal peel adhesion to polycarbonate which means the impact properties at low performance temperatures are also marginal. This has precluded the use of such interlayers in security glass applications exposed to cold climates.

A need, therefore, exists in the art for a plasticized PVB sheet having the properties of those disclosed in U.S. 4,128,694, but which has a low Tg and higher peel adhesion and therefore improved low temperature performance properties when present as a functional PVB interlayer in a security glass laminate. Higher peel adhesion (i.e. equal to or greater than 10 newtons per cm) is needed to maintain laminate integrity during and after laminate impacting. However, very high peel adhesion (i.e. equal to greater than 30 newtons per cm) can produce laminate failure due to breakthrough when the laminate is impacted. On the other hand, very low peel adhesion (i.e. less than 10 newtons per cm) can produce delamination on impacting, e.g. along the laminate edges.

### Summary of the invention

Now improvements have been developed which overcome the aforementioned deficiencies of the prior art.

Accordingly, it is a principal object of this invention to provide a plasticized PVB sheet which is usable in contact with polycarbonate and has improved performance properties over a wide range of temperatures in a security glass laminate.

A further object is to provide such a PVB sheet which can be laminated on existing commerical laminating lines without altering laminating conditions.

An additional object is to provide an improvement in the process for preparing PVB sheet which incorporates a plasticizer component responsible for improving the peel adhesion and penetration resistance at low temperatures of a laminate containing such plasticized PVB in contact with polycarbonate or polyacrylate.

These and other objects are accomplished in a PVB sheet plasticized with a multiester of an alcohol having 2 to 4 hydroxyl groups and a $C_{16}$ to $C_{20}$ unsaturated fatty acid having a hydroxyl group attached to the acid molecule by providing the improvement which comprises, in combination with such multiester, a

# 0 133 848

monoester of a glycol and such $C_{16}$ to $C_{20}$ unsaturated fatty acid. The monoester is preferably propylene 1,2 glycol partially esterified with ricinoleic acid.

Description of preferred embodiments

US—A—4,128,694 discloses a plasticizer for PVB resin in the form of a specific fatty acid multiester of an alcohol having 2 to 4 hydroxyl groups and a $C_{16}$ to $C_{20}$ unsaturated fatty acid having a hydroxyl group attached to the acid molecule. The term "multiester" as used herein means an ester formed by esterifying more than one hydroxyl group of such an alcohol with such an acid. Such plasticizer in a PVB interlayer does not attack polycarbonate or polyacrylate when present in a multiple panel safety or security glass laminate assembly. In the present invention, a monoester species of such specific fatty acid multiester is combined with the latter to form a plasticizer blend for PVB which unexpectedly lowers the Tg of PVB plasticized therewith and incrementally improves the PVB interlayer penetration resistance and peel adhesion to polycarbonate over that obtained using the fatty acid multiester alone. Performance with polyacrylate is predicted to be similar. The plasticizer blend of the present invention, therefore, comprises a multiester component (e.g. a triester) combined with a monoester glycol component, each component being derivable from the same class of unsaturated fatty acids.

The preferred multiester component of the plasticizer blend of the present invention is contained in castor oil which is a triglyceride ester of fatty acids. It comprises a mixture of esters of glycerol with the following acids, (the figure in parentheses being the approximate weight percent of esters formed from that acid): ricinoleic acid (89.5%), oleic acid (3.0%), linoleic acid (4.2%), stearic acid 1% and dihydroxystearic acid. Approximately 63.6% of the ricinoleate is triester, (glycerol triricinoleate) 31.1% diester and 5.1% the monoester. The latter level of monoester in castor oil is insufficient in itself to provide the improvement of the present invention. Other multiesters found useful wherein one molecule of the esterifying acid has reacted with each available hydroxyl of the alcohol are those based on triethylene glycol, trimethylol propane and pentaerythritol.

The unsaturated fatty acid monoester found synergistically effective as an additional plasticizer in combination with the preferred castor oil in PVB sheet in property improving combination in a blend with the multiester referred to above is a monoester of a glycol and a $C_{16}$ to $C_{20}$ unsaturated fatty acid having a hydroxyl group attached to the acid molecule. The preferred monoester is propylene glycol 1,2 monoricinoleate. Though not certain of the reason, it appears that the unreacted hydroxyl group immediately adjacent the acid linkage in the monoester plays an important function in the plasticizer blend insofar as improving the peel adhesion to polycarbonate or polyacrylate of PVB interlayer plasticized therewith, as well as the penetration resistance of glass laminates made up of layers of these materials.

The acids that may be used to form the multiester and monoester plasticizer components of the blend of the present invention have from 16 to 20 carbon atoms and include in addition to ricinoleic acid, (12-hydroxyoleic acid) other hydroxy-oleic acids with the hydroxyl group located other than on the "12" carbon atom such as 6-, 8-, 14-, or 16-hydroxy-oleic acid, 12-hydroxyelaidic acid and acids with the same empirical formula with the hydroxyl located on other than the "12" atom. Also included are the corresponding variations of 12-hydroxy-hexodec-9-enoic acid and 12-hydroxy-eicos-9-enoic acid.

A single acid may provide all the esterifying acid groups but usually a mixture of unsaturated esterifying acids, are used, provided that the esterifying acids together provide at least one unsaturation and one hydroxyl group per molecule of plasticizer.

The amount of plasticizer blend to be used in the polyvinylbutyral sheet of the invention should preferably be from 10 to 55 parts per hundred parts of PVB resin (phr). The more preferred amount is 20 to 50 phr, and particularly preferred is 30 to 40 phr.

The weight proportion of monoester to multiester in the plasticizer blend should preferably be between 1:1 to 5:1. When castor oil is used as the multiester, allowance may optionally be made for the minor level of monoester therein in determining the total amount of monoester to be used in the blend. It is preferred that the monoester be present as the major constituent of the plasticizer blend, i.e. present in amount greater than the multiester. The most preferred proportion of monoester to multiester is about 2:1.

The monoesters are commercially available from CasChem Inc., Bayonne, New Jersey, 07002 under the registered trademark Flexricin. The various grades of each used in the Examples following are identified in the footnotes to Table 1.

In general, the polyvinyl butyral resins employed may be considered to be made up, on a weight basis, of from 5 to 25 percent hydroxyl groups, calculated as polyvinyl alcohol, 0 to 4 percent acetate groups, calculated as polyvinyl acetate, and the balance substantially butyral. The resin will preferably contain, on a weight basis, from 10 to 25 percent hydroxyl groups, calculated as polyvinyl alcohol and from 0 to 10 percent acetate groups, calculated as polyvinyl acetate, the balance being substantially butyraldehyde acetal.

The polyvinylbutyral sheet of the invention can be used to make a simple laminate with the sheet in contact on at least one surface with a polycarbonate or a polyacrylate sheet. Usually one of the surfaces of the interlayer will be in contact with a different material such as glass. Such laminates are claimed in EP—A—0133611 (priority dates: 12,08,83, 15,08,83 and 07.12.83; data of filing: 10.08.84; date of publication: 27.02.85), where will also be found a description of their production and use.

The sheet of the invention may be treated to reduce light transmission by tinting or by supplying a

3

**0 133 848**

metallized surface. The treatment can be such as to produce a uniform reduction in light transmission over the whole sheet or perhaps in the form of a band or other form of localized effect.

In addition to the plasticizers, the sheet of the present invention may contain other additives such as dyes, ultraviolet light stabilizers, salts to control adhesion and antioxidants and may, if desired, be treated with additives to improve laminating efficiency.

The invention is further described with reference to the following examples which are for illustration only and are not intended to imply any limitation or restriction on the invention.

Examples 1—9

Laminates of uncoated, general purpose high impact, glazing grade, polycarbonate (Lexan® 9030) and PVB sheet were made using various plasticizers according to the following procedure.

The PVB used contained 18 weight percent hydroxyl groups (measured as polyvinyl alcohol) and had a solution viscosity of .23—.25 Pa · s as determined by Kinematic Viscometer, Cannon Fenske type (ASTM D-4445). The plasticizer(s) was added to the PVB resin and mixed either manually or with a low intensity laboratory mixer and allowed to sit overnight to promote absorption of the plasticizer by the resin. A sigma blade mixer with steam for heating passing through the mixer jacket was then used for about ten minutes to melt and mix the resin and plasticizer and form molten crumbs of plasticized PVB.

The crumbs of plasticized PVB were deposited in a frame and pressed into blocks 35.5 cm by 40.6 cm of about 5 cm thickness. Slices of plasticized interlayer of about 0.75 mm thickness were cut from these blocks and separated from each other via interposed plastic film, conditioned for about one hour at 20 to 35% relative humidity to control moisture level therein at 0.4 to 0.5 weight%.

Initially washed polycarbonate (0.32 cm to 0.62 cm thickness) sheets and layers of commercially available float glass were used in assembling each laminate as follows: a slice of plasticized interlayer was placed on either side of the polycarbonate layer and then a layer of glass placed against each layer of interlayer. The loosely assembled laminate was pre-compressed at about 4.576 MPa (46.7 kg/cm$^2$) at temperatures of 100°C—215°C in conventional manner using a heated press, then air-autoclaved at 93°C, .343 MPa (3.5 kg/cm$^2$) for one hour, 10 min, followed by 135°C and 1.274 MPa (13 kg/cm$^2$) for one hour after which the temperature was reduced to 38°C for 20 min whereupon the pressure was reduced to end the cycle.

Other laminates for peel adhesion testing were prepared using standard laminating techniques familiar to those in the art except that an adhesive coated aluminum foil was substituted for one of the glass layers and the glass and interlayer on the other side of the polycarbonate was eliminated.

Values for the various properties presented in Table 1 following were determined according to the following procedures.

The glass transition temperature (Tg) of plasticized PVB was measured using a Rheometric Mechanical Spectrometer which is a rectangular torsion test conducted in a nitrogen atmosphere at a constant frequency (1-hertz) and temperature.

Compatability of plasticizer and PVB resin as determined by the extent of exudation of the plasticizer from the resin after melt mixing was visually noted by the absence or presence and level of free plasticizer either on the surface of the plasticized resin or in the bowl of the sigma blade mixer.

Penetration resistance of the glass-polycarbonate-plasticized interlayer laminates was measured by dropping a 2270 g steel ball five times from 2.4 m onto the laminate which had been pre-conditioned for two hours at the temperature at which the test was run. The integrity of the sample insofar as the extent, if any, of delamination along the glass cracks between the polycarbonate and interlayer was visually noted after five drops. The term "good integrity" as used in Table 1 following means that some portion of the laminate, such as the edge area, had all components adhered together after testing.

Clarity of the autoclaved laminate as determined by haze level was visually noted.

Stress cracking of the polycarbonate by the plasticizer(s) used in the interlayer was determined at 23°C and 70°C. In this test the stress applied to polycarbonate specimens was incrementally increased to 13.8 MPa while a patch saturated with the plasticizer fluid was applied at the point of maximum stress and the stress noted at which cracking occurred. More specifically, injection molded polycarbonate coupons in the form of beams about 2.54 cm wide were loaded for a specified time, e.g. 10 minutes, and then the patch saturated with the test plasticizer was applied to the point of maximum stress for an additional time depending on the temperature—i.e. 72 hours at 23°C and 8 hours at 70°C.

Peel adhesion-two parallel grooves 4 cm apart were formed lengthwise through the aluminum foil and interlayer. The polycarbonate at one end of the laminate a few cm in from the end was scored and broken perpendicular to the grooves. The outside edge of the aluminum foil and interlayer on each side of the 4 cm strip was cut at the polycarbonate break. The foil, interlayer and cut polycarbonate were then clamped in the test grips of an Instron® tensile tester and the force required to separate the foil and interlayer from the polycarbonate along the grooves measured at room temperature. A range of 10 to 30 newtons/cm is desired to provide the optimum balance of impact and delamination resistance in the laminate.

The results obtained are set forth in the following Table 1.

TABLE 1

| Example | Plasticizer | Amount (phr) | Ratio monoester/polyester | Penetration resistance | | | Peel Adhesion Newtons/cm |
|---|---|---|---|---|---|---|---|
| | | | | −10°C | 0°C | 23°C | |
| 1* | Glycerol tri-ricinoleate[1,5] | 47.5 | — | complete de-lamination | complete de-lamination | significant de-lamination in impact area | 8—9 |
| 2 | Glycerol tri-ricinoleate (GT) and propylene glycol monori-cinoleate (PGM)[2,5] | 12.75 / 30 | 2.4:1 | some delamin-ation—good laminate in-tegrity | some delamin-ation—good laminate integrity | no delamina-tion—good laminate in-tegrity | 15—22[3] |
| 3* | Propylene glycol monoricinoleate (PGM) | 42 | — | significant delamination in impact area— good laminate integrity | — | — | 12 |
| 4* | Pentaerythritol Monoricinoleate[4] | 45 | — | — | — | — | 12.8 |
| 5* | Glycerol triricin-oleate/pentaery-thritol monoricin-oleate | 15 / 30 | 2.0:1 | — | — | — | — |
| 6* | Ethylene glycol monoricinoleate[6] | 45 | | significant de-lamination in impact area; good laminate integrity | — | — | 13.6 |
| 7 | Glycerol triricin-oleate/ethylene glycol monoricin-oleate | 15 / 30 | 2.0:1 | some delamina-ation in impact area; good lam-inate integrity | — | — | 10.5 |
| 8* | Glycerol mono-ricinoleate | 42.5 | — | — | — | — | 13.0 |
| 9* | Glycerol tri-ricinoleate/glycerol monoricinoleate | 12.5 / 30.0 | 2.4:1 | complete[7] delamina-tion | — | — | 13.2 |

0 133 848

| Example | Tg (°C) | Compatability | Clarity | Stress cracking MPa | |
| --- | --- | --- | --- | --- | --- |
| | | | | 23°C | 70°C |
| 1* | 36—38 | fair | good | None at 13.8 | None at 13.8 |
| 2 | 17.5 | good | good | None at 13.8 | 11.7 |
| 3* | 18 | good | good | None at 13.8 | 6.9 |
| 4* | 30 | fair | fair | None at 13.8 | None at 13.8 |
| 5* | >30°C (Estimated) | fair | poor— reddish tinge | — | — |
| 6* | 19 | good | good | None at 13.8 | 6.9 |
| 7 | 23 | good | good | — | — |
| 8* | 26 | poor— (over lubri- cated) | fair— reddish tinge | None at 13.8 | 10.3 |
| 9* | 26 | poor— (over lubri- cated) | fair | — | — |

*Comparative Example
1. AA-Standard Grade Castor Oil from Spencer Kellogg
2. PGM was Flexricin® 9
3. Value of 22 obtained with cosmetic (pure) grade of Flexricid® 9
4. Flexricin® 17
5. Laminates were 0.6 m by 0.6 m
6. Flexricin® 15
7. Laminates were 10 cm by 15 cm

Stress crack performance of the glycerol triricinoleate/ethylene glycol monoricinoleate blend of Example 7 is predicted to be equivalent to that obtained with the blend of Example 2 containing propylene glycol monoricinoleate.

The foregoing data indicates that when the multiester is the sole or principal plasticizer in the plasticized interlayer (Example 1) in accordance with US—A—4,128,694, though stress crack resistance of the polycarbonate is good, the tendency to delaminate is high and therefore the penetration resistance is poor because of the relatively high value of Tg and low peel adhesion. When the lower molecular weight glycol monoester (Examples 3 and 6) was used alone, Tg was reduced and penetration resistance was improved, but at the expense of stress crack resistance of the polycarbonate at high temperature. However, when only a relatively minor amount (12.5—15 parts) of the multiester was added to the monoester, (Examples 2, and 7) acceptable stress crack resistance was obtained and peel adhesion was significantly increased with respect to the propylene glycol monoricinoleate species of Example 2 without a reduction in Tg and in penetration resistance. This significant increase in peel adhesion and failure of Tg to increase with the addition of the multiester constituent to the monoester constituent was unexpected. The blend containing a monoester of an alcohol having more than two hydroxyl groups, i.e. the pentaerythritol monoricinoleate species of Example 5 and the glycerol monoricinoleate species of Example 9, which are outside the scope of this invention, were deficient in color (Example 5) and compatibility (Example 9).

Though the plasticized PVB sheet of the invention can be formed by slicing from blocks as disclosed in the foregoing Examples, it is preferably formed by extrusion mixing and sheet formation of the interlayer in a slot die.

The monoester glycol component of the plasticizer blend of the invention may comprise blends of monoesters, such as a blend of individual ethylene and propylene glycol monoester constituents.

While certain specific embodiments of the invention have been described with particularity herein, it will be recognized that various modifications thereof will occur to those skilled in the art. The scope of the invention, therefore, is to be limited solely by the scope of the following claims.

## Claims

1. A polyvinylbutyral sheet plasticized with a multiester of an alcohol having 2 to 4 hydroxyl groups and a $C_{16}$ to $C_{20}$ unsaturated fatty acid having a hydroxyl group attached to the acid molecule, characterised in that it is plasticised in combination with such multiester, with a monoester of a glycol and such $C_{16}$ to $C_{20}$ unsaturated fatty acid.

2. A plasticized sheet of Claim 1, wherein the monoester is propylene glycol-1,2 monoricinoleate.

3. A plasticized sheet of Claim 1, wherein the monoester is ethylene glycol monoricinoleate.

4. A plasticized sheet of Claim 1, 2 or 3, wherein the ratio of monoester to multiester is between 1:1 to 5:1.

5. A plasticized sheet of Claim 4, wherein said ratio is about 2:1.

6. A plasticized sheet of Claim 4, wherein the multiester is present as a castor oil component.

7. A process for the preparation of a polyvinylbutyral sheet by blending polyvinylbutyral with a plasticizer which is a multiester of an alcohol having 2 to 4 hydroxyl groups and a $C_{16}$ to $C_{20}$ unsaturated fatty acid having a hydroxyl group attached to the acid molecule and extruding the blend to form a sheet, characterised in that a monoester of a glycol and said $C_{16}$ to $C_{20}$ unsaturated fatty acid is added to the blend.

8. A process of Claim 7, wherein the monoester is propylene glycol monoricinoleate.

9. A process of Claim 7, wherein the monoester is ethylene glycol monoricinoleate.

10. A process of Claim 7, 8 or 9, wherein the ratio of monoester to multiester in the blend is between 1:1 to 5:1.

11. A process of Claim 10, wherein said ratio is about 2:1.

12. The process of Claim 11, wherein the multiester is present as a castor oil component.

13. A plasticizer blend for polyvinyl butyral comprising a multiester of an alcohol having 2 to 4 hydroxyl groups and a $C_{16}$ to $C_{20}$ unsaturated fatty acid having a hydroxyl group attached to the acid molecule, characterised in that it comprises, in combination with the said multiester, a monoester of a glycol and said unsaturated fatty acid, said monoester being present on a weight basis in an amount equal to or greater than the multiester in said blend.

14. A blend of Claim 13, wherein the monoester is formed from at least one member of the group consisting of ethylene glycol, propylene glycol-1,2 and mixtures thereof.

15. A blend of Claim 14, wherein the monoester is formed from propylene glycol-1,2.

16. A blend of Claim 14, wherein monoester is formed from ethylene glycol.

17. A blend of Claim 13, 14, 15, or 16, wherein the acid is ricinoleic acid.

18. A blend of Claim 17, wherein the monoester is a blend of ethylene glycol monoricinoleate and propylene glycol monoricinoleate.

19. A blend of Claim 17, wherein the multiester is present as a component of castor oil.

## Patentansprüche

1. Polyvinylbutyralbahn, die mit einem Multiester aus einem Alkohol mit 2 bis 4 Hydroxylgruppen und

einer ungesättigten $C_{16}$ bis $C_{20}$-Fettsäure mit einer an das Säuremolekül gebundenen Hydroxylgruppe weichgemacht ist, dadurch gekennzeichnet, daß sie in Kombination mit dem Multiester mit einem Glycolmonoester und der ungesättigten $C_{16}$ bis $C_{20}$-Fettsäure weichgemacht ist.

2. Weichgemachte Bahn nach Anspruch 1, dadurch gekennzeichnet, daß der Monoester 1,2-Propylenglycolmonorizinoleat ist.

3. Weichgemachte Bahn nach Anspruch 1, dadurch gekennzeichnet, daß der Monoester Ethylenglycolmonorizinoleat ist.

4. Weichgemachte Bahn nach Anspruch 1, 2 oder 3, dadurch gekennzeichnet, daß das Verhältnis des Monoesters zu dem Multiester zwischen 1:1 bis 5:1 liegt.

5. Weichgemachte Bahn nach Anspruch 4, dadurch gekennzeichnet, daß dieses Verhältnis etwa 2:1 beträgt.

6. Weichgemachte Bahn nach Anspruch 4, dadurch gekennzeichnet, daß der Multiester als Rizinusölbestandteil vorliegt.

7. Verfahren zur Herstellung einer Polyvinylbutyralbahn durch Mischen von Polyvinylbutyral mit einem Weichmacher aus einem Multiester aus einem Alkohol mit 2 bis 4 Hydroxylgruppen und einer ungesättigten $C_{16}$ bis $C_{20}$-Fettsäure mit einer an das Säuremolekül gebundenen Hydroxylgruppe, und Extrudieren der Mischung unter Bildung einer Bahn, dadurch gekennzeichnet, daß man einen Glycolmonoester und die ungesättigte $C_{16}$ bis $C_{20}$-Fettsäure zu der Mischung hinzufügt.

8. Verfahren nach Anspruch 7, dadurch gekennzeichnet, daß der Monoester Propylenglycolmonorizinoleat ist.

9. Verfahren nach Anspruch 7, dadurch gekennzeichnet, daß der Monoester Ethylenglycolmonorizinoleat ist.

10. Verfahren nach Anspruch 7, 8 oder 9, dadurch gekennzeichnet, daß das Verhältnis des Monoesters zu dem Multiester in der Mischung zwischen 1:1 bis 5:1 liegt.

11. Verfahren nach Anspruch 10, dadurch gekennzeichnet, daß dieses Verhältnis etwa 2:1 beträgt.

12. Verfahren nach Anspruch 11, dadurch gekennzeichnet, daß der Multiester als Rizinusölbestandteil vorliegt.

13. Weichmachermischung für Polyvinylbutyral aus einem Multiester aus einem Alkohol mit 2 bis 4 Hydroxylgruppen und einer ungesättigten $C_{16}$ bis $C_{20}$-Fettsäure mit einer an das Säuremolekül gebundenen Hydroxylgruppe, dadurch gekennzeichnet, daß sie in Kombination mit dem Multiester einen Glycolmonoester und die ungesättigte Fettsäure enthält, wobei der Monoester in der Mischung gewichtsmäßig in gleichen oder größeren Mengen als der Multiester vorliegt.

14. Mischung nach Anspruch 13, dadurch gekennzeichnet, daß der Monoester aus der mindestens Ethylenglycol, 1,2-Propylenglycol und Mischungen davon umfassenden Gruppe gebildet ist.

15. Mischung nach Anspruch 14, dadurch gekennzeichnet, daß die Monoester aus 1,2-Propylenglycol gebildet ist.

16. Mischung nach Anspruch 14, dadurch gekennzeichnet, daß der Monoester aus Ethylenglycol gebildet ist.

17. Mischung nach Anspruch 13, 14, 15 oder 16, dadurch gekennzeichnet, daß die Säure Rizinusölsäure ist.

18. Mischung nach Anspruch 17, dadurch gekennzeichnet, daß der Monoester eine Mischung aus Ethylenglycolmonorizinoleat und Propylenglycolmonorizinoleat darstellt.

19. Mischung nach Anspruch 17, dadurch gekennzeichnet, daß der Multiester als Rizinusölbestandteil vorliegt.

## Revendications

1. Feuille de polyvinyl butyral plastifié avec un multiester d'un alcool ayant 2 à 4 groupes hydroxyle et d'un acide gras insaturé en $C_{16}$ à $C_{20}$ ayant un groupe hydroxyle fixé sur la molécule d'acide, caractérisée en ce qu'elle est plastifiée en combinaison avec ce multiester, avec un monoester d'un glycol et d'un tel acide gras insaturé en $C_{16}$ à $C_{20}$.

2. Feuille plastifiée suivant la revendication 1, dans laquelle le monoester est le monoricinoléate de propylène glycol-1,2.

3. Feuille plastifiée suivant la revendication 1, dans laquelle le monoester est le monoricinoléate d'éthylène glycol.

4. Feuille plastifiée suivant les revendications 1, 2 ou 3, dans laquelle le rapport du monoester au multiester est compris entre 1:1 et 5:1.

5. Feuille plastifiée suivant la revendication 4, dans laquelle ce rapport est d'environ 2:1.

6. Feuille plastifiée suivant la revendication 4, dans laquelle le multiester est présent sous la forme d'un constituant de l'huile de ricin.

7. Procédé de préparation d'une feuille de polybutyral vinylique par mélange de polybutyral vinylique avec un plastifiant qui est multiester d'un alcool ayant 2 à 4 groupes hydroxyle et d'un acide gras insaturé en $C_{16}$ à $C_{20}$ ayant un groupe hydroxyle fixé à la molécule d'acide, et extrusion ou mélange pour former une feuille, caractérisé en ce qu'un monoester d'un glycol et d'un tel acide gras insaturé en $C_{16}$ à $C_{20}$ est ajouté au mélange.

8. Procédé de la revendication 7, dans lequel le monoester est le monoricinoléate de propylène glycol.

9. Procédé de la revendication 7, dans lequel le monoester est le monoricinoléate d'éthylène glycol.

10. Procédé des revendications 7, 8 ou 9, dans lequel le rapport du monoester au multiester dans le mélange est compris entre 1:1 et 5:1.

11. Procédé de la revendication 10, dans lequel ce rapport est d'environ 2:1.

12. Procédé de la revendication 11, dans lequel le multiester est présent sous forme de constituant de l'huile de ricin.

13. Mélange de plastifiants pour le polybutyral vinylique comprenant un multiester d'un alcool ayant 2 à 4 groupes hydroxyle et d'un acide gras insaturé en $C_{16}$ à $C_{20}$ ayant un groupe hydroxyle fixé à la molécule d'acide, caractérisé en ce qu'il comprend, en association avec ce multiester, un monoester d'un glycol et d'un tel acide gras insaturé, ce monoester étant présent dans une quantité pondérale égale ou supérieure à celle du multiester dans ce mélange.

14. Mélange de la revendication 13, dans lequel le monoester est formé à partir d'au moins un élément du groupe constitué de l'éthylène glycol, du propylène glycol-1,2 et de mélanges de ceux-ci.

15. Mélange de la revendication 14, dans lequel le monoester est formé à partir de propylène glycol-1,2.

16. Mélange de la revendication 14, dans lequel le monoester est formé à partir d'éthylène glycol.

17. Mélange des revendications 13, 14, 15 ou 16, dans lequel l'acide est l'acide ricinoléique.

18. Mélange de la revendication 17, dans lequel le monoester est un mélange de monoricinoléate d'éthylène glycol et de monoricinoléate de propylène glycol.

19. Mélange de la revendication 17, dans lequel le multiester est présent sous forme de constituant de l'huile de ricin.